# EUROPEAN PATENT APPLICATION

(11) **EP 4 770 042 A1**
(43) Date of publication of application: **01.07.2026**
(21) Application number: 25837482.6
(22) Date of filing: 04.07.2025
(51) Int. Cl.: H04L 49/25, H04L 43/026, H04L 49/20, H04L 45/125, H04L 45/302, B60K 35/80, H01M 10/42, H04L 12/40, G06F 9/455

(54) **COMMUNICATION CONTROL DEVICE, VEHICLE COMPRISING SAME, AND METHOD**

(30) Priority: 08.07.2024 KR 20240089433
(71) Applicant: LG ENERGY SOLUTION, LTD., Seoul 07335 (KR)
(72) Inventor: YANG, Seong Yeol, Daejeon 34122 (KR); LEE, Ye Seul, Daejeon 34122 (KR); SIN, Jung Sik, Daejeon 34122 (KR); KIM, Kyu Eun, Daejeon 34122 (KR)
(74) Representative: Plasseraud IP
(86) International application number: PCT/KR2025/009594
(87) International publication number: WO 2026/014818

(57) **Abstract**

According to an embodiment disclosed herein, a communication control device may include a main control unit, an auxiliary control unit, and an end device, and the auxiliary control unit may determine, when receiving data from the main control unit or the end device, a target communication unit among the plurality of communication units based on at least one of a characteristic, a kind, a type, a source, or a destination of the data, or any combination thereof and transmit the data to the destination through the target communication unit.

## Description

### TECHNICAL FIELD

### Cross-reference to Related Applications

This application claims priority from Korean Patent Application No. 10-2024-0089433, filed on July 8, 2024, the disclosure of which is incorporated by reference herein.

### Technical Field

Embodiments disclosed herein relate to a communication control device and method, and a vehicle including the communication control device.

### BACKGROUND ART

With the spread of electric vehicles powered by electricity, research and development into new vehicle architectures is actively underway. For example, an electric vehicle may be powered by a secondary battery, where the secondary battery is a rechargeable battery, including conventional Ni/Cd batteries, Ni/MH batteries, or the like, and recent lithium-ion batteries. Among secondary batteries, the lithium-ion battery has the advantage of having a much higher energy density than the existing Ni/Cd battery, Ni/MH battery, and the like. In addition, since the lithium-ion battery may be manufactured to be small and lightweight, the lithium-ion battery is used as a power source for mobile devices, and in recent years, its scope of use has expanded to include power sources for electric vehicles, so that the lithium-ion battery attracts attention as a next-generation energy storage medium.

Such battery cells, battery modules, battery packs, or battery racks may be utilized in various devices. For example, batteries may be used in mobile devices such as mobile phones, laptop computers, smartphones, and smart pads, as well as in electric vehicles (EVs, hybrid electric vehicles (HEVs), plug-in HEVS (PHEVs)), large-capacity energy storage systems (ESSs), and the like.

The state and operation of these batteries may be managed and controlled by a battery management system (BMS). The BMS may be included with the batteries in a single device.

Meanwhile, as the automobile industry changes, the concept of future mobility such as software defined vehicles (SDVs), purpose-built vehicles (PBVs), and the like is gradually becoming more concrete. For example, the SDV is a type of vehicle that controls and manages hardware components using software. The software in accordance with the SDV may define not only a vehicle's driving performance but also its convenience features, safety features, emotional quality, and brand identity. By the architecture through the SDV, it may be possible to reduce vehicle development costs through ECU standardization and software internalization. In addition, autonomous driving technology may be advanced through high-performance computers and networks based on electronic architecture.

### DISCLOSURE OF THE INVENTION

### TECHNICAL PROBLEM

In a process of autonomous driving control being performed on a vehicle, managing and storing data related to autonomous driving is becoming increasingly important. In a vehicle including a software defined vehicle (SDV) architecture, a specific control unit (e.g., an auxiliary control unit or a zonal controller) may serve as a gateway or network switch to perform format conversion based on Signal-to-Data-Frame, or perform a response logic based on various data management methods under critical environments such as accident detection or the like.

One object of the embodiments disclosed herein is to provide a communication control device and method that slices data according to the type, purpose, source, destination, or the like of data transmitted to a control device (e.g., a zone controller) corresponding to each of a plurality of zones in a vehicle including an SDV architecture, allocates the sliced data to a plurality of communication units for communication, and transmits the data to other devices based on different methods, and a vehicle including the communication control device.

The technical problems of the embodiments disclosed herein are not limited to those mentioned above, and other objectives not mentioned will be clearly understood by those skilled in the art from the following descriptions.

### TECHNICAL SOLUTION

According to an embodiment disclosed herein, a communication control device may include a main control unit, an auxiliary control unit connected to the main control unit and including a plurality of communication units, and an end device connected to the main control unit and the auxiliary control unit.

According to the embodiment, the auxiliary control unit may be configured to, when receiving data from the main control unit or the end device, determine a target communication unit among the plurality of communication units based on at least one of a characteristic, a kind, a type, a source, or a destination of the data, or any combination thereof and transmit the data to the destination through the target communication unit.

According to the embodiment, the auxiliary control unit may be configured to slice the data based on at least one of the number of cores of the auxiliary control unit, a task priority, a message queue priority, a resource and a memory allocation result of a hypervisor, or any combination thereof and determine the target communication unit based on at least one of the characteristic, the kind, the type, the source, or the destination of each data slice, or any combination thereof.

According to the embodiment, the auxiliary control unit may be configured to transmit first data including control data, which is included in the sliced data, to a first destination through a first communication unit supporting a first bandwidth, transmit second data including the control data, which is included in the sliced data, to a second destination through a second communication unit supporting a second bandwidth, or transmit third data including media data, which is included in the sliced data, to a third destination through a third communication unit supporting a third bandwidth.

According to the embodiment, the auxiliary control unit may be configured to transmit the first data to the first destination based on a first speed through the first communication unit, transmit the second data to the second destination based on a second speed higher than the first speed through the second communication unit, or transmit the third data to the third destination based on a third speed higher than the second speed through the third communication unit.

According to the embodiment, the first bandwidth may be smaller than the second bandwidth, and the second bandwidth may be smaller than the third bandwidth.

According to the embodiment, the auxiliary control unit may transmit the first data to the first destination through the first communication unit that operates based on a real time operating system (RTOS).

According to the embodiment, the first destination may include a first control device included in the main control unit or the end device and provided for operating a host vehicle, the second destination may include a second control device included in the main control unit or the end device and provided for diagnosing the host vehicle and determining a state of the host vehicle, and the third destination may include a third control device included in the main control unit or the end device and provided for controlling an entertainment device included in the host vehicle.

According to the embodiment, the data may include information about at least one of a voltage, a current, or a temperature of a battery included in the host vehicle or any combination thereof.

According to an embodiment disclosed herein, a vehicle including the communication control device of the embodiment described above is provided.

According to an embodiment disclosed herein, a communication control method may include receiving, by an auxiliary control unit, data from a main control unit or an end device, determining, by the auxiliary control unit, a target communication unit among a plurality of communication units based on at least one of a characteristic, a kind, a type, a source, or a destination of the data, or any combination thereof of the data, and transmitting, by the auxiliary control unit, the data to the destination through the target communication unit.

According to the embodiment, the communication control method may further include slicing, by the auxiliary control unit, the data based on at least one of the number of cores of the auxiliary control unit, a task priority, a message queue priority, a resource and a memory allocation result of a hypervisor, or any combination thereof and determining, by the auxiliary control unit, the target communication unit based on at least one of the characteristic, the kind, the type, the source, or the destination of each data slice, or any combination thereof.

According to the embodiment, the communication control method may further include, by the auxiliary control unit, transmitting first data including control data, which is included in the sliced data, to a first destination through a first communication unit supporting a first bandwidth, transmitting second data including the control signal to a second destination through a second communication unit supporting a second bandwidth, or transmitting third data including media data to a third destination through a third communication unit supporting a third bandwidth.

According to the embodiment, the communication control method may further include, by the auxiliary control unit, transmitting the first data to the first destination based on a first speed through the first communication unit, transmitting the second data to the second destination based on a second speed higher than the first speed through the second communication unit, or transmitting the third data to the third destination based on a third speed higher than the second speed through the third communication unit.

According to the embodiment, the first bandwidth may be smaller than the second bandwidth, and the second bandwidth may be smaller than the third bandwidth.

According to the embodiment, the communication control method may further include transmitting, by the auxiliary control unit, the first data to the first destination through the first communication unit that operates based on a real time operating system (RTOS).

According to the embodiment, the first destination may include a first control device included in the main control unit or the end device and provided for operating a host vehicle, the second destination may include a second control device included in the main control unit or the end device and provided for diagnosing the host vehicle and determining a state of the host vehicle, and the third destination may include a third control device included in the main control unit or the end device and provided for controlling an entertainment device included in the host vehicle.

According to the embodiment, the data may include information about at least one of a voltage, a current, or a temperature of a battery included in the host vehicle or any combination thereof.

### ADVANTAGEOUS EFFECTS

According to the embodiments disclosed herein, in a vehicle including an SDV architecture, as the amount of data required for vehicle operations such as autonomous driving or the like increases, a communication control device for a vehicle that intuitively and quickly performs communication operations and a method thereof can be provided by slicing data based on characteristics of the data and efficiently transmitting the data slices to different devices based on different methods, thereby reducing a network load and minimizing an influence between data having different characteristics.

Besides, various effects may be provided that are directly or indirectly identified through the present disclosure.

### BRIEF DESCRIPTION OF THE DRAWINGS

FIG. 1 is a conceptual diagram illustrating a structure of a vehicle including a communication control device according to an embodiment disclosed herein.
FIG. 2 is a conceptual diagram illustrating a structure of a vehicle including a communication control device according to an embodiment disclosed herein.
FIG. 3 is a block diagram illustrating a configuration of a communication control device according to an embodiment disclosed herein.
FIG. 4 is a block diagram illustrating a configuration of an auxiliary control unit according to an embodiment disclosed herein.
FIG. 5 is a conceptual diagram illustrating a method of transmitting data by a communication control device according to an embodiment disclosed herein.
FIG. 6 is a flowchart of a communication control method according to an embodiment disclosed herein.
FIG. 7 is a block diagram showing a hardware configuration of a computing system for performing a method of operating a communication control device according to an embodiment disclosed herein.

### MODE FOR CARRYING OUT THE INVENTION

Hereinafter, various embodiments disclosed in the present disclosure will be described with reference to the accompanying drawings. However, this is not intended to limit the present invention to the specific embodiments, and it is to be construed to include various modifications, equivalents, and/or alternatives of embodiments of the present invention.

Herein, it is to be understood that a singular form of a noun corresponding to an item may include one or more of the things, unless the relevant context clearly indicates otherwise. As used herein, each of phrases such as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. Terms such as "1st" and "2nd," or "first" and "second" may be used to simply distinguish a corresponding component from another, and do not limit the components in other aspects (e.g., importance or order). It is to be understood that if an element (e.g., a first element) is referred to, with or without the term "operatively" or "communicatively," as "coupled with," "coupled to," "connected with," or "connected to" another element (e.g., a second element), it means that the element may be coupled with the other element directly (e.g., wiredly), wirelessly, or via a third element.

Each of the components described herein (e.g., a module or program) may contain a single entity or a plurality of entities. According to various embodiments, one or more of the components may be omitted, or one or more other components may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

As used herein, the term "module" or "unit" may include a unit implemented in hardware, software, or firmware, and may interchangeably be used with other terms, such as "logic," "logic block," "part," or "circuitry." A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., a program) or an application including one or more instructions that are stored in a storage medium (e.g., a memory) that is readable by a machine. For example, a processor of the machine may invoke at least one of the one or more instructions stored in the storage medium, and execute it. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Here, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

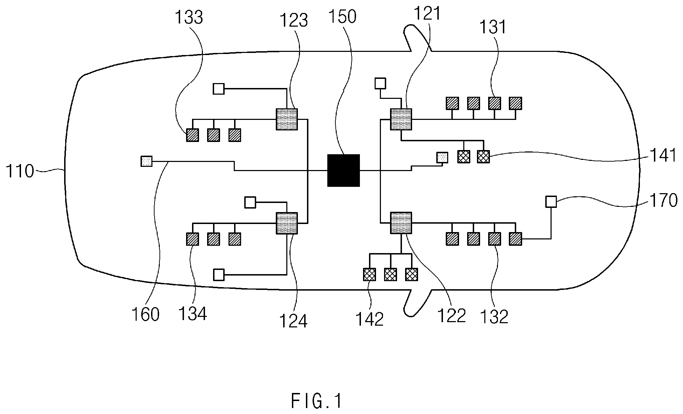

FIG. 1 is a conceptual diagram illustrating a structure of a vehicle including a communication control device according to an embodiment disclosed herein.

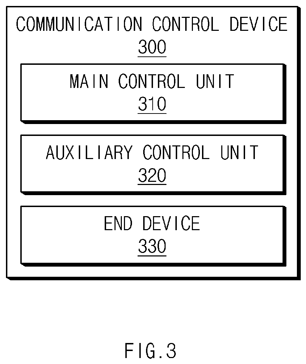

According to an embodiment, a communication control device (e.g., a communication control device 300 in FIG. 3) may include at least some of the components included in a vehicle 110 according to a software defined vehicle (SDV) architecture. The communication control device may, for example, manage power and/or data transmitted and received between components of the vehicle 110.

For example, the vehicle 110 may include at least one of a first zone controller 121, a second zonal controller 122, a third zone controller 123, a fourth zone controller 124, a first end device 131, a second end device 132, a third end device 133, a fourth end device 134, a first actuator 141, a second actuator 142, a high performance computer (HPC) 150, a transmission/reception path 160, an additional element 170, or any combination thereof. The communication control device for managing data of the vehicle 110 may include at least some of the components included in the vehicle 110.

For example, components in accordance with the SDV architecture may include a hierarchical structure of the HPC 150, the zone controller, and the end device in this order.

For example, the HPC 150 may be connected to the first zone controller 121, the second zone controller 122, the third zone controller 123, and the fourth zone controller 124, and may transmit and receive various types of data to and from each zone controller.

For example, the first zone controller 121, the second zone controller 122, the third zone controller 123, and the fourth zone controller 124 may control the first end device 131, the second end device 132, the third end device 133, and the fourth end device 134, respectively. The end device may include, for example, at least one of a sensor for controlling the vehicle 110, a battery (or a BMS) for driving the vehicle 110, or any combination thereof. For example, when one of the second end devices 132 is a BMS, the additional element 170 may be defined as a battery pack.

For example, the first zone controller 121 and the second zone controller 122 may control the first actuator 141 and the second actuator 142, respectively. The actuator may include, for example, at least one driving device for driving the vehicle 110.

For example, the components described above may perform communication based on a specified path (e.g., the transmission/reception path 160) via automotive Ethernet.

The communication control device according to an embodiment disclosed herein may control and manage a communication process for power and/or data transmitted and received between the above-described components.

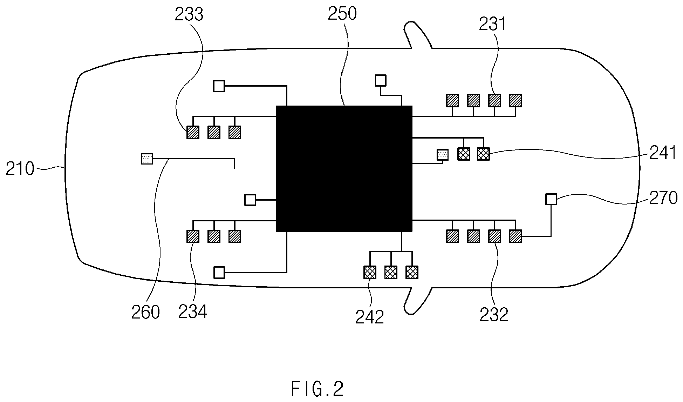

FIG. 2 is a conceptual diagram illustrating a structure of a vehicle including a communication control device according to an embodiment disclosed herein.

In FIG. 2, the description of components defined with the same names as in FIG. 1 may be replaced with the description of FIG. 1 described above.

For example, a host vehicle 210 may include at least one of a first end device 231, a second end device 232, a third end device 233, a fourth end device 234, a first actuator 241, a second actuator 242, a high-performance computer (HPC) 250, a transmission/reception path 260, an additional element 270, or any combination thereof. The communication control device for managing data of the host vehicle 210 may include at least some of the components included in the host vehicle 210.

For example, the host vehicle 210 according to FIG. 2 does not include a zone controller as compared to FIG. 1. That is, even when the SDV architecture is employed, the host vehicle 210 may be implemented in a structure in which the HPC 250 directly controls at least one end device, as illustrated in FIG. 2.

FIG. 3 is a block diagram illustrating a configuration of a communication control device according to an embodiment disclosed herein.

Referring to FIG. 3, a communication control device 300 may include a main control unit 310, an auxiliary control unit 320, and/or an end device 330.

According to an embodiment, the communication control device 300 may perform power and/or data management between components for controlling the host vehicle. For example, the host vehicle may be operated by components in accordance with the SDV architecture. For example, an SDV may include a hierarchical structure of HPC (high performance computer), Zone, End device, and Sensor/Actuator. In this case, a vehicle according to SDV may be divided into a plurality of zones, and each zone may include a controller (e.g., a zone controller) for controlling components of a lower layer included in the zone. The controller of the zone may be electrically connected to the HPC, and may transmit and receive various signals. The above-described contents are exemplary, and the embodiments of the present invention are not limited thereto. For example, according to another embodiment based on the SDV architecture (e.g., the embodiment of the SDV architecture illustrated in FIG. 2), the HPC and the end device are operatively connected, and the zone may be omitted. For example, the auxiliary control unit 320 may include a zone controller corresponding to each of a plurality of zones within the host vehicle (e.g., a front zone, a rear zone, a left zone, and a right zone).

The communication control device 300 may transmit and receive at least one of power, data (e.g., a wake-up packet), a control signal, or any combination thereof to components included in an electronic device. In an embodiment, the electronic device may be a mobile device (e.g., a mobile phone, a laptop computer, a smartphone, or a smart pad), an electric vehicle (e.g., an electric vehicle (EV), a hybrid EV (HEV), a plug-in HEV (PHEV), a fuel cell EV (FCEV)), an energy storage system (ESS), or a battery swapping system (BSS). In an embodiment, the electronic device may include a vehicle (e.g., an electric vehicle, a hybrid vehicle, etc.) and a mobile device that is powered by electrical energy. In other words, for example, the communication control device 300 may be included in a vehicle, and may be configured to manage data for operation of the vehicle (e.g., operation for autonomous driving control).

The operation of the communication control device 300 below may be performed by a battery management system (BMS) within the vehicle or a battery BMS provided within the battery pack, and may also be performed in various devices such as a server, a cloud, a charger, or a charger/discharger.

According to an embodiment, the main control unit 310 may be electrically connected to the auxiliary control unit 320, and/or the end device 330 to transmit, receive, and manage various types of data.

For example, the main control unit 310 may include at least one HPC. The main control unit 310 may include, for example, at least one HPC for controlling a multimedia device (e.g., a display) included in the vehicle, a diagnostic device for diagnosing the vehicle, a control device for a battery (or BMS), a data processing device, and the like.

For example, in FIG. 3, the main control unit 310 and the auxiliary control unit 320 are shown as physically distinct separate components, but this is merely exemplary, and the main control unit 310 may be implemented as a single chip with the auxiliary control unit 320. In this case, as in the embodiment of FIG. 2, at least one main control unit 310 (or HPC) may also perform the role of the auxiliary control unit 320.

According to an embodiment, the auxiliary control unit 320 may be operatively connected to the main control unit 310 and may include a plurality of communication units.

For example, the auxiliary control unit 320 may include a plurality of zonal controllers, respectively, corresponding to a plurality of zones of the host vehicle. Each of the plurality of zonal controllers may include a plurality of communication units.

For example, the auxiliary control unit 320 may control data transmission and reception operations between a plurality of zonal controllers using at least some of the plurality of communication units.

For example, the auxiliary control unit 320 may transmit and receive data to and from other devices (e.g., the main control unit 310 and/or the end device 330) using at least some of the plurality of communication units.

For example, when the auxiliary control unit 320 receives data from the main control unit 310 or the end device 330, the auxiliary control unit 320 may determine a target communication unit corresponding to the received data and transmit the data to a destination through the target communication unit. The data may include, for example, information (e.g., battery voltage, current, temperature, and the like) about components of the host vehicle (e.g., battery, driving and braking devices, sensors, multimedia devices, and the like) including the communication control device 300.

For example, the auxiliary control unit 320 may determine the target communication unit among the plurality of communication units based on at least one of a characteristic, a kind, a type, a source, or a destination of the data, or any combination thereof.

For example, the auxiliary control unit 320 may slice the data based on a specified criterion, thereby classifying the data into a plurality of data slices. The auxiliary control unit 320 may slice the data based on at least one of, for example, the number of cores of the auxiliary control unit 320, a task priority, a message queue priority, a resource and a memory allocation result of a hypervisor, or any combination thereof.

For example, the auxiliary control unit 320 may determine the number of times of slicing based on the number of cores of the auxiliary control unit 320.

For example, the auxiliary control unit 320 may slice the data by grouping data having the same task priority or task priorities within a specified range into one data slice.

For example, the auxiliary control unit 320 may slice the data by grouping data having the same message queue priority or message queue priorities within a specified range into one data slice.

For example, the auxiliary control unit 320 may slice the data using the resource and the memory allocation result of the hypervisor.

For example, the auxiliary control unit 320 may determine the target communication unit corresponding to each data slice based on at least one of a characteristic, a kind, a type, a source, or a destination of the data slice, or any combination thereof.

For example, the auxiliary control unit 320 may transmit first data including control data in the sliced data to a first destination through a first communication unit supporting a first bandwidth. In other words, the auxiliary control unit 320 may slice, as the first data, control data included in data received from other devices. The control data may be, for example, data provided for vehicle driving and/or the operation of the communication control device 300. The first communication unit may, for example, transmit the first data to the first destination based on a first speed.

For example, the auxiliary control unit 320 may transmit second data including sensor data in the sliced data to a second destination through a second communication unit supporting a second bandwidth. In other words, the auxiliary control unit 320 may slice, as the second data, sensor data included in data received from other devices. The sensor data may include, for example, vehicle operation information (e.g., driving speed, acceleration, indoor temperature, outdoor temperature, operation history, and the like), battery information (e.g., temperature, pressure, current, voltage), status information about components included in the communication control device 300, and the like. The second communication unit may transmit the second data to the second destination based on a second speed that is, for example, higher than the first speed.

For example, the auxiliary control unit 320 may transmit third data including media data in the sliced data to a third destination through a third communication unit supporting a third bandwidth. In other words, the auxiliary control unit 320 may slice, as the third data, media data included in data received from other devices. The media data may include, for example, at least one image, video, audio, haptic data, and the like. The third communication unit may transmit the third data to the third destination based on a third speed that is, for example, higher than the second speed.

For example, the first bandwidth may be smaller than the second bandwidth, and the second bandwidth may be smaller than the third bandwidth. The auxiliary control unit 320 may, for example, transmit the first data to the first destination using the first communication unit supporting the smallest bandwidth, and transmit the third data to the third destination using the third communication unit supporting the largest bandwidth.

For example, the first communication unit may operate based on a real time operating system (RTOS).

For example, the first destination may include a first control device included in the main control unit 310 or the end device 330 and provided for the operation of the host vehicle. The first destination may include, for example, a control end device (Ctrl End Device) for driving control of the host vehicle.

For example, the second destination may include a second control device included in the main control unit 310 or the end device 330 and provided for diagnosing the host vehicle and determining the state of the host vehicle. The second destination may include, for example, an HPC that operates for diagnosing components (e.g., a battery) included in the host vehicle or for data processing.

For example, the third destination may include a third control device included in the main control unit 310 or the end device 330 and provided for controlling an entertainment device included in the host vehicle. The third destination may include, for example, an HPC for controlling a display included in the host vehicle and/or a display end device.

According to an embodiment, the end device 330 may be electrically connected to the main control unit 310 and/or the auxiliary control unit 320.

For example, the end device 330 may include a plurality of control devices for controlling components of the host vehicle (e.g., a sensor, a camera, a battery pack, an actuator, a display, and the like).

For example, the end device 330 may be a BMS including the battery pack, but this is exemplary and the embodiments disclosed herein are not limited thereto.

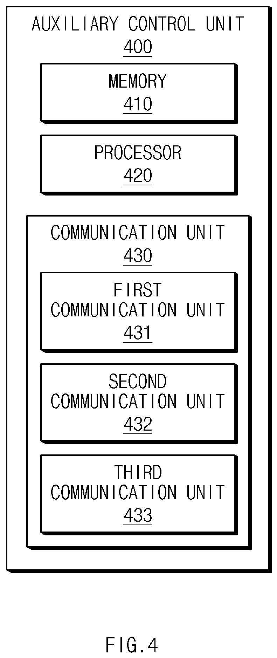

FIG. 4 is a block diagram illustrating a configuration of an auxiliary control unit according to an embodiment disclosed herein.

According to an embodiment, a communication control device (e.g., the communication control device 300 in FIG. 3) may include an auxiliary control unit 400 (e.g., the auxiliary control unit 320 in FIG. 3).

According to an embodiment, the auxiliary control unit 400 may include a memory 410, a processor 420, and/or a communication unit 430. The configuration of the auxiliary control unit 400 illustrated in FIG. 4 is exemplary, and embodiments of the present invention are not limited thereto. For example, the auxiliary control unit 400 may further include components not illustrated in FIG. 4 (e.g., at least one of a display unit, a notification unit, a sensor unit, a plurality of zone controllers, or any combination thereof). For example, the auxiliary control unit 400 may include a plurality of zonal controllers. Each of the plurality of zonal controllers may include the memory 410, the processor 420, and the communication unit 430.

According to an embodiment, the memory 410 may store commands or data. For example, the memory 410 may store one or more instructions that, when executed by the processor 420, cause the auxiliary control unit 400 to perform various operations.

For example, the memory 130 may be implemented together with the processor 120 in a single chipset. The processor 420 may include at least one of a communication processor or a modem.

For example, the memory 410 may store various types of information related to the communication control device (or a battery pack). For example, the memory 410 may store information about an operation history of the processor 420. For example, the memory 410 may store information related to the state and/or operation of the components of the auxiliary control unit 400 (or the battery pack).

For example, the memory 410 may include a plurality of storage devices of different types. For example, the memory 410 may include at least one of a random-access memory (RAM), an Embedded Multi-Media Card (eMMC), or any combination thereof.

According to an embodiment, the processor 420 may be operatively connected to the memory 410 and/or the communication unit 430. For example, the processor 420 may control the operation of the memory 410.

For example, the processor 420 may be implemented as any one of a micro controller unit (MCU), a domain controller unit (DCU), or a zone control unit (ZCU).

For example, the processor 420 may receive various types of data from a main control unit (e.g., the main control unit 310 in FIG. 3) and/or an end device (e.g., the end device 330 in FIG. 3). The processor 420 may, for example, slice the received data based on specified criterion.

For example, the processor 420 may transmit the data slices to a destination using the communication unit 430.

According to an embodiment, the communication unit 430 may support the establishment of a communication channel between the auxiliary control unit 400 and an external device (e.g., an external device within the host vehicle connected to the main control unit, the auxiliary control unit and the communication control device), and the performance of communication through the established communication channel. The communication unit 420 may include one or more communication processors that are operable independently from the processor 420 (e.g., an application processor (AP)) and support direct (e.g., wired) communication or wireless communication.

For example, the communication unit 430 is illustrated as being divided into a plurality of communication units, but the plurality of communication units may be implemented to be integrated into a single component (e.g., a single chip) and logically divided.

For example, the processor 420 may assign control data to a first communication unit 431, sensor data to a second communication unit 432, and media data to a third communication unit 433.

For example, the first communication unit 431 may operate based on a real time operating system (RTOS). The first communication unit 431 may transmit and receive data, for example, through a communication protocol with relatively few network resources (e.g., 10based-T1S and/or controller area network (CAN)).

For example, the second communication unit 432 may support a second communication speed (e.g., 100 Mbps) that is higher than a first communication speed (e.g., 10 Mbps) of the first communication unit 431. The second communication unit 432 may transmit, for example, data required for diagnosis or processing to the outside. The second communication unit 432 may process, transmit, and receive, for example, data that does not require real-time performance. The second communication unit 432 may transmit and receive, for example, data through a communication protocol with medium network resources (e.g., 100based-T1).

For example, the third communication unit 433 may support a third communication speed (e.g., 10 Gbps) that is higher than those of the first communication unit 431 and the second communication unit 432. The third communication unit 433 may transmit, for example, media data output through a multimedia device to the outside. The third communication unit 433 may transmit and receive data, for example, through a communication protocol with relatively large network resources (e.g., 10 Gbps Ethernet communication).

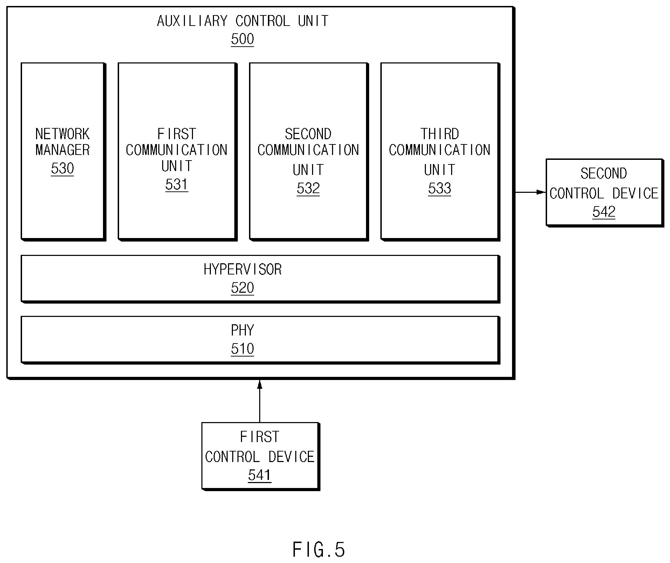

FIG. 5 is a conceptual diagram illustrating a configuration of a communication control device according to an embodiment disclosed herein.

According to an embodiment, FIG. 5 may be a structural diagram illustrating a software structure of an auxiliary control unit 500. The auxiliary control unit 500 (e.g., the auxiliary control unit 320 in FIG. 3) may include a PHY 510, a hypervisor 520, a network manager 530, a first communication unit 531 (e.g., the first communication unit 431 in FIG. 4), a second communication unit 532 (e.g., the second communication unit 532 in FIG. 4), and a third communication unit 533 (e.g., the third communication unit 433 in FIG. 4). The structure of the auxiliary control unit 500 illustrated in FIG. 5 is exemplary, and some of the illustrated components (e.g., the hypervisor 520) may be omitted or additional components (e.g., the memory and the processor) not illustrated may be included.

For example, the auxiliary control unit 500 may transmit and receive data to and from a first control device 541 and/or a second control device 542. The first control device 541 and the second control device 542 may include a main control unit (e.g., the main control unit 310 in FIG. 3) or an end device (e.g., the end device 330 in FIG. 3). The first control device 541 and the second control device 542 may be one external device.

For example, the communication control device may further include at least one other auxiliary control unit. In this case, the communication control device may control data transmission and reception between the auxiliary control unit 500 and at least one other auxiliary control unit.

For example, the auxiliary control unit 500 may receive data from the first control device 541. The received data may be transmitted to the network manager 530 through a PHY (510) layer and a hypervisor (520) layer.

For example, the auxiliary control unit 500 may slice data using the hypervisor 520 and/or the network manager 530 and allocate the sliced data to at least one communication unit.

For example, the hypervisor 520 and/or the network manager 530 may slice the data based on at least one of a characteristic, a kind, a type, a source, or a destination of the data, the number of cores of the auxiliary control unit 500, a task priority, a message queue priority, a resource and a memory allocation result of the hypervisor 520, or any combination thereof.

For example, the hypervisor 520 and/or the network manager 530 may determine a target communication unit to allocate the sliced data based on at least one of the characteristic, kind, type, source, or destination of each data slice, or any combination thereof.

For example, the hypervisor 520 and/or the network manager 530 may allocate first data including control data to the first communication unit 531 supporting a first bandwidth.

For example, the hypervisor 520 and/or the network manager 530 may allocate second data including sensor data to the second communication unit 532 supporting a second bandwidth greater than the first bandwidth.

For example, the hypervisor 520 and/or the network manager 530 may allocate third data including media data to the third communication unit 533 supporting a third bandwidth greater than the second bandwidth.

For example, the first communication unit 531 may transmit data at a first communication speed, the second communication unit 532 may transmit data at a second communication speed higher than the first communication speed, and the third communication unit 533 may transmit data at a third communication speed higher than the second communication speed.

For example, the auxiliary control unit 500 may transmit data slices to the second control device 542 using a plurality of communication units. The second control device 542 may include, for example, a plurality of control devices.

For example, the auxiliary control unit 500 may transmit the first data to a first destination through the first communication unit 531. The first destination may include, for example, control devices included in the main control unit or the end device and provided for the operation of the host vehicle.

For example, the auxiliary control unit 500 may transmit the second data to a second destination through the second communication unit 532. The second destination may include, for example, control devices included in the main control unit or end device and provided for diagnosing the host vehicle and determining the state of the host vehicle.

For example, the auxiliary control unit 500 may transmit the third data to a third destination through the third communication unit. The third destination may include, for example, control devices included in the main control unit or end device and provided for controlling an entertainment device included in the host vehicle.

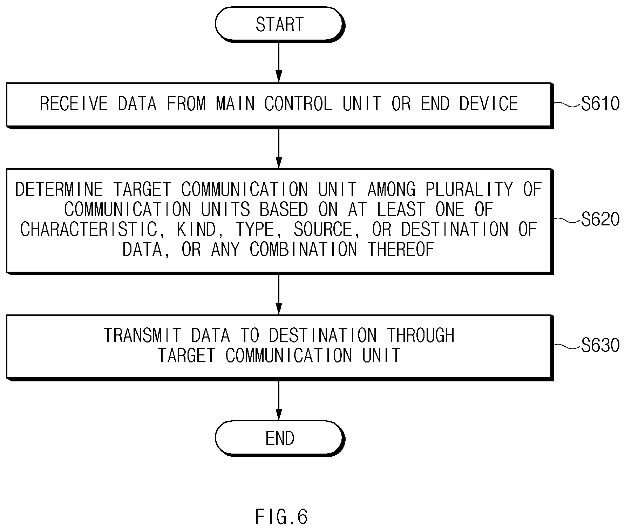

FIG. 6 is a flowchart of a communication control method according to an embodiment disclosed herein.

According to an embodiment, a communication control device (e.g., the communication control device 300 in FIG. 3) may perform operations disclosed in FIG. 6. For example, at least some of the components included in the communication control device (e.g., the main control unit 310, the auxiliary control unit 320, and/or the end device 330 of FIG. 3) may be configured to perform the operations of FIG. 6.

In the following embodiment, operations S610 to S630 may be sequentially performed, but is not necessarily performed sequentially. For example, the order of the operations may be changed, and at least two operations may be performed in parallel. In addition, with reference to FIG. 6, details that correspond to or overlap with the foregoing may be briefly described or omitted.

Referring to FIG. 6, the communication control method may include step S610 of receiving, by the auxiliary control unit, data from the main control unit or the end device, step S620 of determining, by the auxiliary control unit, a target communication unit among a plurality of communication units based on at least one of a characteristic, a kind, a type, a source, or a destination of the data, or any combination thereof, and step S630 of transmitting the data to the destination through the target communication unit.

In step S620, the auxiliary control unit may slice the data based on at least one of the number of cores of the auxiliary control unit, a task priority, a message queue priority, a resource and a memory allocation result of a hypervisor, or any combination thereof and determine the target communication unit for each data slice among a plurality of communication units based on at least one of the characteristic, the kind, the type, the source, or the destination of each data slice, or any combination thereof.

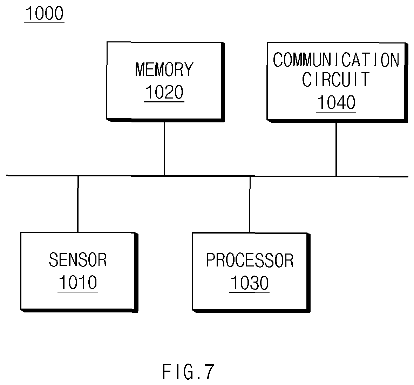

FIG. 7 is a block diagram showing a hardware configuration of a computing system for performing a method of operating a communication control device according to an embodiment disclosed herein.

Referring to FIG. 7, a computing system 3000 according to an embodiment disclosed herein may include a microcontroller unit (MCU) 1010, a memory 1020, an input/output interface (I/F) 1030, and a communication I/F 1040.

The MCU 1010 may be a processor that executes various programs stored in the memory 1020, processes various types of information including data and the like of the battery through the programs, and performs functions of the processor (or the controller) included in the communication control device shown in the aforementioned FIG. 3.

The memory 1020 may store various programs for performing the functions of the communication control device. In addition, the memory 1020 may store various types of information including battery data (voltage data, capacity data, and the like), differential capacity data, and the like, and may include a constructed database.

A plurality of memories 1020 may be provided as needed. The memory 1020 may be a volatile memory or a non-volatile memory. As the volatile memory, the memory 1020 may be a random-access memory (RAM), a dynamic RAM (DRAM), a static RAM (SRAM), or the like. For the memory 1020 as the non-volatile memory, a read-only memory (ROM), a programmable ROM (PROM), an electrically alterable ROM (EAROM), an erasable programmable ROM (EPROM), an electrically erasable programmable ROM (EEPROM,) a flash memory, or the like may be used. The examples of memories 1020 listed above are only exemplary and are not limited to the examples.

The input/output I/F 1030 may provide an interface that connects an input device (not shown) such as a keyboard, mouse, touch panel, or the like, and an output device such as a display (not shown), to the MCU 1010 to enable data transmission and reception.

The communication I/F 1040 is a component that may transmit and receive various data to and from the server, and may be any device that may support wired or wireless communication. For example, the communication control device may transmit and receive various types of information, including battery data, to and from a separately provided external server or the like through the communication I/F 1040.

A computer program according to an embodiment disclosed herein may be recorded in the memory 1020 and processed by the MCU 1010, and thereby may be implemented as a module that performs each of the functions shown in FIG. 1, for example.

Although all the components constituting the embodiments disclosed herein have been described as being combined or operating in combination as one, the embodiments disclosed herein are not necessarily limited to these embodiments. That is, within the scope of the purpose of the embodiments disclosed herein, all of the components may be selectively combined and operated one or more times.

Terms such as "include," "comprise," or "have" described above mean that the corresponding component may be present unless otherwise stated, and thus it should be construed that other components may be further included rather than excluding other components. All terms including technical or scientific terms have the same meaning as commonly understood by those of ordinary skill in the art to which embodiments disclosed herein belong, unless otherwise defined. Terms commonly used such as those defined in dictionaries should be interpreted as having a meaning that is consistent with their meaning in the context of the related art and will not be interpreted in an idealized or overly formal sense unless expressly so defined herein.

The above description is merely an example of the technical idea disclosed herein, and those with ordinary skill in the art to which the embodiments disclosed herein belong may make various modifications and variations without departing from the essential characteristics of the embodiments disclosed herein. Accordingly, the embodiments disclosed herein are not intended to limit the technical ideas of the embodiments disclosed herein but rather to explain them, and the scope of the technical ideas disclosed herein is not limited by these embodiments. The scope of protection disclosed herein should be interpreted by the accompanying claims, and all technical ideas within the scope equivalent thereto should be construed as being included in the scope of rights herein.

## Claims

1. A communication control device comprising:
a main control unit;
an auxiliary control unit connected to the main control unit and including a plurality of communication units; and
an end device connected to the main control unit and the auxiliary control unit,
wherein the auxiliary control unit is configured to:
when receiving data from the main control unit or the end device, determine a target communication unit among the plurality of communication units based on at least one of a characteristic, a kind, a type, a source, or a destination of the data, or any combination thereof; and
transmit the data to the destination through the target communication unit.

2. The communication control device of claim 1, wherein the auxiliary control unit is configured to:
slice the data based on at least one of the number of cores of the auxiliary control unit, a task priority, a message queue priority, a resource and a memory allocation result of a hypervisor, or any combination thereof; and
determine the target communication unit based on at least one of the characteristic, the kind, the type, the source, or the destination of each data slice, or any combination thereof.

3. The communication control device of claim 2, wherein the auxiliary control unit is configured to:
transmit first data including control data, which is included in the sliced data, to a first destination through a first communication unit supporting a first bandwidth;
transmit second data including sensor data, which is included in the sliced data, to a second destination through a second communication unit supporting a second bandwidth; or
transmit third data including media data, which is included in the sliced data, to a third destination through a third communication unit supporting a third bandwidth.

4. The communication control device of claim 3, wherein the auxiliary control unit is configured to:
transmit the first data to the first destination based on a first speed through the first communication unit;
transmit the second data to the second destination based on a second speed higher than the first speed through the second communication unit; or
transmit the third data to the third destination based on a third speed higher than the second speed through the third communication unit.

5. The communication control device of claim 3, wherein the first bandwidth is smaller than the second bandwidth, and
the second bandwidth is smaller than the third bandwidth.

6. The communication control device of claim 3, wherein the auxiliary control unit transmits the first data to the first destination through the first communication unit that operates based on a real time operating system (RTOS).

7. The communication control device of claim 3, wherein the first destination includes a first control device included in the main control unit or the end device and provided for operating a host vehicle,
the second destination includes a second control device included in the main control unit or the end device and provided for diagnosing the host vehicle and determining a state of the host vehicle, and
the third destination includes a third control device included in the main control unit or the end device and provided for controlling an entertainment device included in the host vehicle.

8. The communication control device of claim 1, wherein the data includes information about at least one of a voltage, a current, or a temperature of a battery included in the host vehicle or any combination thereof.

9. A vehicle comprising the communication control device of any one of claims 1 to 8.

10. A communication control method, comprising:
receiving, by an auxiliary control unit, data from a main control unit or an end device;
determining, by the auxiliary control unit, a target communication unit among a plurality of communication units based on at least one of a characteristic, a kind, a type, a source, or a destination of the data, or any combination thereof of the data; and
transmitting, by the auxiliary control unit, the data to the destination through the target communication unit.

11. The communication control method of claim 10, further comprising:
slicing, by the auxiliary control unit, the data based on at least one of the number of cores of the auxiliary control unit, a task priority, a message queue priority, a resource and a memory allocation result of a hypervisor, or any combination thereof; and
determining, by the auxiliary control unit, the target communication unit based on at least one of the characteristic, the kind, the type, the source, or the destination of each data slice, or any combination thereof.

12. The communication control method of claim 11, further comprising, by the auxiliary control unit, transmitting first data including control data, which is included in the sliced data, to a first destination through a first communication unit supporting a first bandwidth, transmitting second data including the control signal to a second destination through a second communication unit supporting a second bandwidth, or transmitting third data including media data to a third destination through a third communication unit supporting a third bandwidth.

13. The communication control method of claim 12, further comprising, by the auxiliary control unit, transmitting the first data to the first destination based on a first speed through the first communication unit, transmitting the second data to the second destination based on a second speed higher than the first speed through the second communication unit, or transmitting the third data to the third destination based on a third speed higher than the second speed through the third communication unit.

14. The communication control method of claim 12, wherein the first bandwidth is smaller than the second bandwidth, and
the second bandwidth is smaller than the third bandwidth.

15. The communication control method of claim 12, further comprising transmitting, by the auxiliary control unit, the first data to the first destination through the first communication unit that operates based on a real time operating system (RTOS).

16. The communication control method of claim 12, wherein the first destination includes a first control device included in the main control unit or the end device and provided for operating a host vehicle,
the second destination includes a second control device included in the main control unit or the end device and provided for diagnosing the host vehicle and determining a state of the host vehicle, and
the third destination includes a third control device included in the main control unit or the end device and provided for controlling an entertainment device included in the host vehicle.

17. The communication control method of claim 10, wherein the data includes information about at least one of a voltage, a current, or a temperature of a battery included in the host vehicle or any combination thereof.
